# EUROPEAN PATENT SPECIFICATION

(11) **EP 3 972 382 B1**
(45) Date of publication and mention of the grant of the patent: **18.03.2026**
(21) Application number: 19928788.9
(22) Date of filing: 13.05.2019
(51) Int. Cl.: H04W 76/27, H04W 48/18, H04W 60/00, H04W 8/18, H04W 8/24, H04W 24/02, H04W 24/08, H04W 60/04

(54) **CONNECTION PROCESSING METHODS AND APPARATUS, AND COMPUTER-READABLE STORAGE MEDIUM**
VERFAHREN UND VORRICHTUNG ZUR VERBINDUNGSVERARBEITUNG, UND COMPUTERLESBARES SPEICHERMEDIUM
PROCÉDÉS ET APPAREIL DE TRAITEMENT DE CONNEXION, ET SUPPORT DE STOCKAGE LISIBLE PAR ORDINATEUR

(43) Date of publication of application: 23.03.2022
(73) Proprietor: Beijing Xiaomi Mobile Software Co., Ltd., Beijing 100085 (CN)
(72) Inventor: HONG, Wei, Beijing 100085 (CN)
(74) Representative: Dehns Germany Partnerschaft mbB
(86) International application number: PCT/CN2019/086579
(87) International publication number: WO 2020/227879

(56) References cited:
- WO-A1-2013/144613
- WO-A1-2020/191524
- WO-A1-2020/209641
- CN-A- 101 938 797
- CN-A- 104 955 065
- CN-A- 108 307 543
- CN-A- 109 076 496
- US-A1- 2018 160 422
- US-A1- 2019 098 596
- APPLE: "UE Assisted RRC State Transition", vol. RAN WG2, no. Reno, USA; 20190513 - 20190517, 3 May 2019 (2019-05-03), XP051711457, Retrieved from the Internet <URL:http://www.3gpp.org/ftp/tsg%5Fran/WG2%5FRL2/TSGR2%5F106/Docs/R2%2D1907166%2Ezip> [retrieved on 20190503]

## Description

### TECHNICAL FIELD

The present disclosure relates to the field of communication technology, and in particular to connection processing methods, a connection processing apparatus and a non-transitory computer-readable medium.

### BACKGROUND

With the development of wireless communication technology, more and more multi-card mobile phones are on the market. The application scenarios of multi-card mobile phones can be: (1) Business users have one private card and one business card, and put the two cards on the same mobile phone; (2) Ordinary users have multiple private cards, and can choose which card to use based on which line of business is being conducted. These cards may come from the same operator or from different operators.

At present, the processing methods for multi-card mobile phones are mainly implemented by various terminal manufacturers. There is no unified standard for specific implementation methods. This has resulted in a variety of different terminal behaviors and processing methods, for example, dual card single standby, dual card dual standby single pass, dual card dual standby dual pass, etc.

US 2018/160422 A1 discloses Dual SIM Dual Standby (DSDS) devices including a first Subscriber Identity Module (SIM) and a second SIM for managing data communication. US 2019/098596 A1 discloses a method for managing dual registration in one or more radio communication systems, which include multiple networks. The 3GPP document titled "UE assisted RRC State Transition" introduces requirements for the UE requesting to enter RRC Inactive/Idle state. WO 2020/191524 A1 discloses techniques for communicating with a multi-subscriber identity module (SIM) deployment configuration. WO 2020/209641 A1 discloses method and system of user equipment (UE) for switching between a plurality of subscriber identity module (SIM) networks in a wireless communication network.

### SUMMARY

In order to overcome the problems in the related art, the present disclosure provides connection processing methods, a connection processing apparatus and a non-transitory computer-readable medium.

According to an aspect of embodiments of the present disclosure, there is provided a connection processing method applied to a user device as defined in amended claim 1.

According to another aspect of the embodiments of the present disclosure, a connection processing method is provided as defined in claim 6.

According to another aspect of the embodiments of the present disclosure, there is provided a connection processing apparatus as defined in claim 11.

According to another aspect of the embodiments of the present disclosure, there is provided a non-transitory computer-readable storage medium, when instructions in the storage medium are executed by a processor of a mobile terminal, the user device is caused to execute the connection processing method.

The technical solutions provided by the embodiments of the present disclosure may include the following beneficial effects.

When the RRC connection state with the base station device of the first operator is needed to be changed, the user device sends an RRC connection state change indication to the base station device of the first operator. Therefore, when the user device changes the RRC connection state with the base station device of the first operator, the base station device of the first operator has already acquired the change in the RRC connection state with the user device, so that it will not be considered as a recovery mechanism caused by a radio link failure, that is, the long-time non-response caused by the user device responding to the paging of the base station device of other operators will not be regarded as a radio link failure, which avoids disturbing the data statistics and correlated algorithm in the base station device of the first operator.

The RRC connection state change indication includes: instructing the base station device of the first operator to change from an RRC connected state to an RRC non-connected state, or instructing the base station device of the first operator to change from the RRC connected state to an RRC idle state. In addition, the RRC connection state change indication further includes at least one of: a reason for changing the RRC connection state, a duration of changing the RRC connection state, and a time of changing the RRC connection state. In this way, the base station device of the first operator can control when the user device suspends or releases the RRC connection with the first system, which will not cause the base station device of the first operator to misguide the control algorithm and avoid the radio link failure and the corresponding recovery mechanism caused thereby.

It should be understood that the above general description and the following detailed description are only exemplary and explanatory, and cannot limit the present disclosure.

### BRIEF DESCRIPTION OF THE DRAWINGS

The drawings herein are incorporated into the specification and constitute a part of the specification, illustrating embodiments in accordance with the present disclosure, and together with the specification are used to explain the principle of the present disclosure.
Fig. 1 is a flowchart showing a connection processing method applied to a user device according to an exemplary embodiment;
Fig. 2 is a flowchart showing a connection processing method applied to a base station device of an operator according to an exemplary embodiment;
Fig. 3 is a flowchart showing a connection processing method according to an exemplary embodiment;
Fig. 4 is a block diagram showing a connection processing apparatus applied to a user device according to an exemplary embodiment;
Fig. 5 is a block diagram showing a connection processing apparatus applied to a base station device of an operator according to an exemplary embodiment; this embodiment is however presented for illustration purposes only;
Fig. 6 is a block diagram showing a connection processing apparatus according to an exemplary embodiment;
Fig. 7 is a block diagram showing a connection processing apparatus according to an exemplary embodiment. This embodiment is however presented for illustration purposes only.

### DETAILED DESCRIPTION

The exemplary embodiments will be described in detail here, and examples thereof are shown in the accompanying drawings. When the following description refers to the drawings, unless otherwise indicated, the same numbers in different drawings indicate the same or similar elements. The implementation manners described in the following exemplary embodiments do not represent all implementation manners consistent with the present invention. On the contrary, they are merely examples of devices and methods consistent with some aspects of the present invention as detailed in the appended claims.

As mentioned above, since the current processing methods for multi-card mobile phones are mainly implemented by various terminal manufacturers, and there is no uniform standard for specific implementation methods, this has resulted in a variety of different terminal behaviors and processing methods, which may cause the following problems:
(1) When a terminal reads paging or measurement at a second operator base station, it will cause a short interval of about 20ms at a base station of a first operator. For the base station of the first operator, it is similar to experiencing shadow fading, but as it will happen once in each paging cycle, this may affect the power control and link adaptation algorithms of the network, and cause a waste of resources for the base station of the first operator;
(2) When the terminal decides to switch to a cell of a base station of a second operator, it needs to read the system information at the base station of the second operator. This will cause a long interval of about 1 second for the base station of the first operator, and the base station of the first operator will consider it as an error condition;
(3) When the terminal performs TAU at the base station of the second operator, it will cause a longer interval of several seconds at the base station of the first operator, and therefore the impact on the base station of the first operator is relative great.

For the above problem, the network may regard a shorter interval (for example, tens of milliseconds) as a problem on the wireless side, but a longer interval may be regarded as an error condition. This will lead to incorrect guidance of the control algorithm, and even lead to the failure of the wireless link connection and trigger the corresponding recovery mechanism. Therefore, the autonomous behavior of the multi-card terminal may disrupt the data statistics and related algorithms of the operator's base station.

In order to solve the above problems, in the method of the present disclosure, when the terminal needs to switch from a communication with a base station of a first operator to a communication with a base station of a second operator, the base station of the first operator can control when the terminal can hang up or release the RRC connection with the base station of the first operator, that is, when the terminal suspends or releases the RRC connection with the base station of the first operator, the base station of the first operator has been informed of this state, which will not cause the wrong guidance on the control algorithm by the base station of the first operator, and will not cause the wireless link to fail and trigger the corresponding recovery mechanism.

The user device in the embodiments of the present disclosure may be various types of user device such as mobile phones, PADs, etc., for example, operating systems such as Android system, IOS system, etc. can be installed, and multiple SIM cards can be set to support user device with multiple operators.

The operator base station device in the embodiment of the present disclosure may be a base station, a Node B, or an eNB.

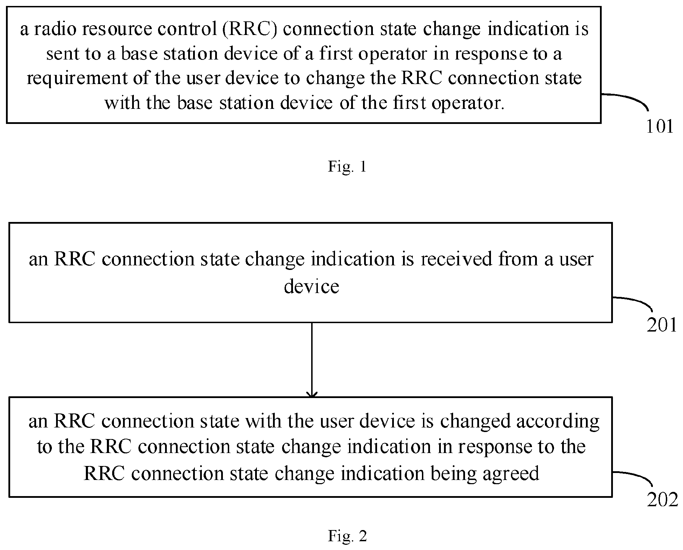

Fig. 1 is a flowchart showing a connection processing method according to an exemplary embodiment. As shown in Fig. 1, the method is used in a terminal, and a user device supports multiple operators. The method includes the following steps.

At step 101, a radio resource control (RRC) connection state change indication is sent to a base station device of a first operator in response to a requirement of the user device to change the RRC connection state with the base station device of the first operator.

In the step 101, when the user device needs to change the RRC connection state with the base station device of the first operator, it sends an RRC connection state change indication to the base station device of the first operator, which prevents the base station device of the first operator from erroneously regard a long-time non-response caused by the user devicer esponding to the paging of the base station device of other operators as a radio link failure, so as to trigger the corresponding recovery mechanism.

In an optional implementation manner, the RRC connection state change indication includes: instructing the base station device of the first operator to change from an RRC connected state to an RRC non-connected state, or instructing the base station device of the first operator to change from the RRC connected state to an RRC idle state. The RRC connected state can be represented by RRC CONNECTED, the RRC non-connected state can be represented by RRC INACTIVE, and the RRC idle state can be represented by RRC IDLE.

In an optional implementation manner, the RRC connection state change indication further comprises at least one of: a reason for changing the RRC connection state, a duration of changing the RRC connection state, and a time of changing the RRC connection state.

When the user device sends the RRC connection state change indication to the base station device of the first operator, the indication may also carry the following information: the reason for changing the RRC connection state, the duration of changing the RRC connection state, and the time of changing the RRC connection state. Based on the reason for changing the RRC connection state, the base station device of the first operator can acquire that the RRC connection state change involves a RRC connection state change among operators. Through the duration of the RRC connection state change and the time of the RRC connection state change, the base station device of the first operator can acquire when the RRC connection is disconnected and the duration of the disconnection.

In an alternative embodiment, the reason for changing the RRC connection state comprises changing a network of the first operator to a network of a second operator to perform one of: monitoring a paging message and/or a system message, performing a measurement, and updating a tracking area.

In an optional implementation manner, after sending the RRC connection state change indication to the base station device of the first operator, the method further includes step 102.

At step 102, a connected state is kept with the base station device of the first operator after acquiring that the base station device of the first operator rejects the RRC connection state change indication, or an RRC connection state is changed after acquiring that the base station device of the first operator agrees to the RRC connection state change indication.

The refusal of the RRC connection state change indication by the base station device of the first operator may specifically include a refusal to execute the RRC connection state change indication, or ignoring the RRC connection state change indication.

After the user device sends the RRC connection state change indication to the base station device of the first operator, it receives from the base station device of the first operator whether the base station device of the first operator agrees to the RRC connection state change indication message, and performs corresponding operations based on the message, that is, the connection state is still maintained with the base station device of the first operator or the RRC connection state change is performed. Through this operation, it can be seen that when the user device changes the RRC connection state with the base station device of the first operator, the base station device of the first operator has already acquired the change in the RRC connection state, so that it will not be considered as a radio link failure. The corresponding recovery mechanism is triggered to avoid disturbing the data statistics and related algorithms in the base station device of the first operator.

In the embodiment of the present invention, sending the RRC connection state change indication to the base station device of the first operator includes: sending the RRC connection state change indication to the base station device of the first operator in response to determining the user device having a configuration that allows sending the RRC connection state change indication to the base station device of the first operator.

In this embodiment, before sending the RRC connection state change indication to the base station device of the first operator, it is necessary to determine whether the user device has the base station device of the first operator configured for it to allow sending the connection state to the base station device of the first operator. To change the configuration of the indication, only the user device with the configuration that allows sending the connection state change indication to the base station device of the first operator can send the RRC connection state change indication when the RRC connection state needs to be changed. That is, the base station device of the first operator can control which user device is allowed to perform the RRC connection state change.

In an embodiment, the method further includes a step 1012.

At step 1012, configuration information that allows the RRC connection state change indication to be sent to the base station device of the first operator is received.

In an embodiment, before receiving the configuration information that allows sending the RRC connection state change indication to the base station device of the first operator, the method further includes a step 1011.

At step 1011, it is reported whether the user device supports a capability of the RRC connection state change indication with the base station device of the first operator.

When the user device registers with the base station device of the first operator, or at the request of the base station device of the first operator, it will report to the base station device of a capability of the RRC connection state change indication with the base station device of the first operator. The capability can be reported through UECapabilityInformation signaling. When the base station device of the first operator receives the report from the user device, it will send a permission to the base station device of the first operator for the user device that supports the capability of the RRC connection state change indication with the base station device of the first operator according to the specific situation. Sending the configuration information of the RRC connection state change indication, or it is not allowed to send the configuration information of the RRC connection state change indication to the base station device of the first operator to the user device. Specifically, when the base station device of the first operator does not allow the user device to send the RRC connection state change indication to it, the configuration information may not be sent.

If the user device that supports the capability of the RRC connection state change indication with the base station device of the first operator receives the configuration information that allows the RRC connection state change indication to be sent to the base station device of the first operator, the user device can change the connection state as needed. When the RRC connection state of the base station device of the first operator, the RRC connection state change indication is sent to the base station device of the first operator.

Fig. 2 is a flowchart showing a connection processing method according to an exemplary embodiment. As shown in Fig. 2, the method is used in a base station device of an operator, and the method includes followings.

At step 201, an RRC connection state change indication is received from a user device.

At step 202, an RRC connection state with the user device is changed according to the RRC connection state change indication in response to the RRC connection state change indication being agreed.

In step 202, if the operator base station device agrees to the RRC connection state change indication, the RRC connection state of the user device is changed to suspension or releasing, where suspension refers to changing from the RRC connected state to the RRC non-connected state, and releasing refers to changing from the RRC connected state to the RRC idle state.

In an optional implementation manner, the method further includes: maintaining the RRC connection state with the user device in response to the RRC connection state change indication being rejected.

The base station device of the first operator may reject the received RRC connection state change indication in the following manner: refusing to execute the RRC connection state change indication, or ignoring the RRC connection state change indication.

Through the above steps, the operator base station device controls the change of the RRC connection state of the user device, which prevents the base station device of the first operator from erroneously regard a long-time non-response caused by the user device responding to the paging of the base station device of other operators as a radio link failure, so as to trigger the corresponding recovery mechanism.

In an optional implementation manner, the RRC connection state change indication includes: instructing the base station device of a first operator to change from an RRC connected state to an RRC non-connected state, or instructing the base station device of the first operator to change from the RRC connected state to an RRC idle state.

In an optional implementation manner, the RRC connection state change indication further includes at least one of: a reason for changing the RRC connection state, the duration of changing the RRC connection state, and a time of changing the RRC connection state.

In an alternative embodiment, the reason for changing the RRC connection state comprises changing a network of the first operator to a network of a second operator to perform one of: monitoring a paging message and/or a system message, performing a measurement, and updating a tracking area.

As can be seen from the above description of the operation steps performed by the user device, the operator base station device can take related operations based on the above information in the RRC connection state change indication, which will not be repeated here.

In an embodiment, before receiving the connection state change indication from the user device, the method further includes a step 2011.

At step 2011, configuration information that allows the RRC connection state change indication to be sent to the base station device of the operator is sent to the user device.

In an embodiment, sending to the user device the configuration information that allows the RRC connection state change indication to be sent to the base station device of the operator includes: receiving a report message, the report message carries a capability of the RRC connection state change indication with the base station device of the operator; acquiring whether the user device supports capability of the RRC connection state change indication according to the report message; and sending to the user device configuration information that allows the RRC connection state change indication to be sent to the base station device of the operator.

After receiving a report message from the user device whether the operator base station device supports the capability of the RRC connection state change indication with the operator base station device, it determines whether the user device supports the capability of the RRC connection state change indication based on the report message. For user device that supports the above-mentioned capabilities, the base station device of the operator sends configuration information that allows sending an RRC connection state change indication to the base station device of the first operator, or configuration information that does not allow to send an RRC connection state change indication to the base station device of the first operator, to the user device. Specifically, when the base station device of the first operator does not allow the user device to send the RRC connection state change indication to it, the configuration information may not be sent.

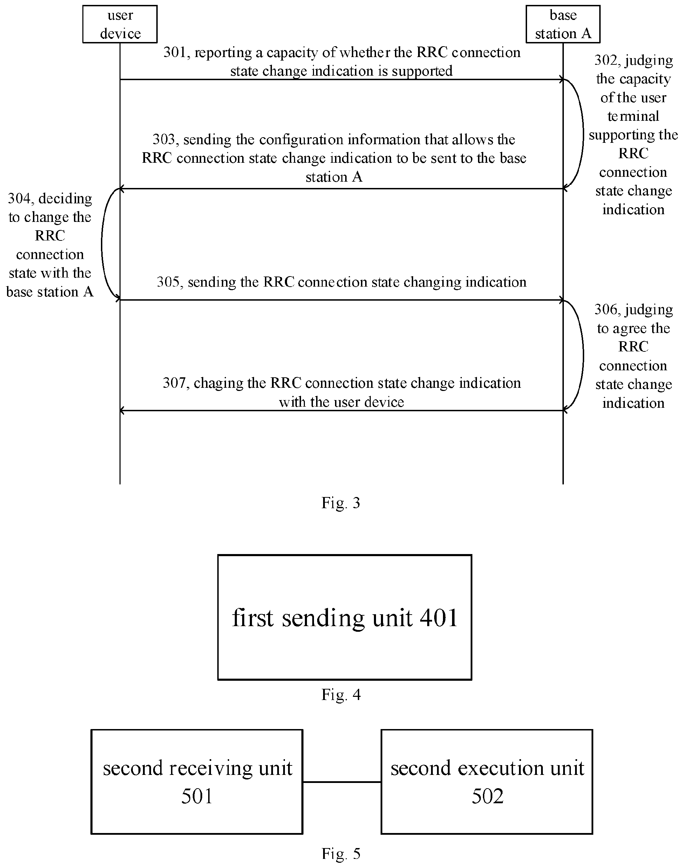

Fig. 3 shows a specific embodiment according to the present disclosure. In this embodiment, the user terminal receives a page from the base station device B of China Unicom during the communication with the base station device A of China Mobile, and the user device decides to switch to the communication with the base station device B of China Unicom. This embodiment includes the following steps.

At step 301, the user terminal reports whether it supports a capability of the RRC connection state change indication with a base station device A of China Mobile to be reported to the base station device A through UECapabilityInformation signaling.

At step 302, after receiving the capability of supporting the RRC connection state change indication from the user terminal through UECapabilityInformation signaling, the base station device A judges the capability of the user terminal to support the RRC connection state change indication based on the received signaling.

At step 303, the base station device A configures the user terminal with configuration information that allows the RRC connection state change indication to be sent to it, and sends the configuration information that allows the RRC connection state change indication to be sent to the base station A through RRCReconfiguration signaling.

At step 304, after receiving the configuration of the base station device A that allows the RRC connection state change indication to be sent to it, the user terminal decides that it needs to change the RRC connection state with the base station device A when receiving a page from the base station device B of China Unicom.

At step 305, an RRC connection state change indication is sent to the base station device A, and the indication carries the reason for the RRC connection state change, the duration of the RRC connection state change, and the time of the RRC connection state change.

At step 306, after receiving the RRC connection state change indication from the user terminal, the base station device A judges that the RRC connection state change indication is approved.

At step 307, the base station device A changes the RRC connection state with the user device.

Fig. 4 is a block diagram showing a connection processing apparatus according to an exemplary embodiment. The connection processing apparatus is applied to a user device that supports multiple operators. Referring to Fig. 4, the connection processing device includes a first sending unit 401, configured to send a radio resource control (RRC) connection state change indication to a base station device of a first operator in response to a requirement of the user device to change the RRC connection state with the base station device of the first operator.

In an optional implementation manner, the RRC connection state change indication comprises: instructing the base station device of the first operator to change from an RRC connected state to an RRC non-connected state, or instructing the base station device of the first operator to change from the RRC connected state to an RRC idle state.

In an optional implementation manner, the RRC connection state change indication further comprises at least one of: a reason for changing the RRC connection state, a duration of changing the RRC connection state, and a time of changing the RRC connection state.

In an alternative embodiment, the reason for changing the RRC connection state comprises changing a network of the first operator to a network of a second operator to perform one of: monitoring a paging message and/or a system message, performing a measurement, and updating a tracking area.

In an optional implementation manner, the connection processing apparatus further includes: a first execution unit, configured to keep a connected state with the base station device of the first operator after acquiring that the base station device of the first operator rejects the RRC connection state change indication, or change an RRC connection state after acquiring that the base station device of the first operator agrees to the RRC connection state change indication.

In this embodiment, the first sending unit 401 is further configured to send the RRC connection state change indication to the base station device of the first operator in response to determining the user device having a configuration that allows sending the RRC connection state change indication to the base station device of the first operator.

In this embodiment, the connection processing apparatus further includes: a first receiving unit, configured to receive configuration information that allows the RRC connection state change indication to be sent to the base station device of the first operator.

In this embodiment, the first sending unit 401 is further configured to report whether the user device supports a capability of the RRC connection state change indication with the base station device of the first operator before the first sending unit receives the configuration information that allows the RRC connection state change indication to be sent to the base station device of the first operator.

Regarding the device in the foregoing embodiment, the specific manner in which each unit performs operation has been described in detail in the embodiment of the method, and detailed description will not be given here.

Fig. 5 is a block diagram showing a connection processing apparatus according to an exemplary embodiment, and the connection processing apparatus is applied to a base station device of an operator. This embodiment is however presented for illustration purposes only.

Referring to Fig. 5, the connection processing apparatus includes: a second receiving unit 501, configured to receive an RRC connection state change indication from a user device; and a second execution unit 502, configured to change an RRC connection state with the user device according to the RRC connection state change indication in response to the RRC connection state change indication being agreed.

In an optional implementation manner, the second execution unit 502 is further configured to maintain the RRC connection state with the user device in response to the RRC connection state change indication being rejected.

In an optional implementation manner, the RRC connection state change indication includes: instructing the base station device of a first operator to change from an RRC connected state to an RRC non-connected state, or instructing the base station device of the first operator to change from the RRC connected state to an RRC idle state.

In an optional implementation manner, the RRC connection state change indication further comprises at least one of: a reason for changing the RRC connection state, the duration of changing the RRC connection state, and a time of changing the RRC connection state.

In an alternative embodiment, the reason for changing the RRC connection state comprises changing a network of the first operator to a network of a second operator to perform one of: monitoring a paging message and/or a system message, performing a measurement, and updating a tracking area.

In an optional implementation manner, the connection processing apparatus further includes: a second sending unit, configured to send to the user device configuration information that allows the RRC connection state change indication to be sent to the base station device of the operator before the second receiving unit receives the connection state change indication from the user device.

In an optional implementation manner, the second receiving unit 501 is further configured to receive a report message before the second sending unit sends the configuration information that allows the RRC connection state change indication to be sent to the base station device of the operator, in which the report message carries a capability of the RRC connection state change indication with the base station device of the operator; the connection processing apparatus further includes an acquiring unit, configured to acquire whether the user device supports capability of the RRC connection state change indication according to the report message.

Regarding the apparatus in the foregoing embodiment, the specific manner in which each unit performs operation has been described in detail in the embodiment of the method, and detailed description will not be given here.

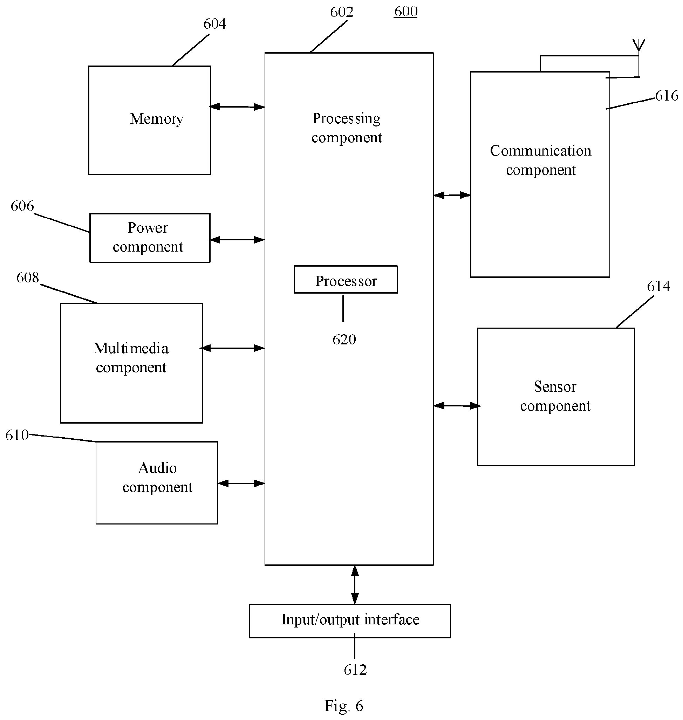

Fig. 6 is a block diagram showing a connection processing apparatus 600 according to an exemplary embodiment.

For example, the apparatus 600 may be a mobile phone, a computer, a digital broadcasting terminal, a messaging device, a game console, a tablet device, a medical device, a fitness device, a personal digital assistant, and the like.

As illustrated in Fig. 6, the apparatus 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the apparatus 600, such as the operations associated with display, telephone calls, data communications, camera operations, and recording operations. The processing component 602 may include one or more processors 620 to execute instructions to perform all or part of the steps in the above described method. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the apparatus 600. Examples of such data include instructions for any applications or methods operated on the apparatus 600, contact data, phonebook data, messages, pictures, video, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the apparatus 600. The power component 606 may include a power management system, one or more power sources, and any other components associated with the generation, management, and distribution of power in the apparatus 600.

The multimedia component 608 includes a screen providing an output interface between the apparatus 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 3708 includes a front-facing camera and/or a rear-facing camera. When the apparatus 600 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 610 is configured to output and/or input audio signals. For example, the audio component 610 includes a microphone (MIC) configured to receive an external audio signal when the apparatus 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide status assessments of various aspects of the apparatus 600. For instance, the sensor component 614 may detect an open/closed status of the apparatus 600, relative positioning of components, e.g., the display and the keypad, of the apparatus 600, a change in position of the apparatus 600 or a component of the apparatus 600, a presence or absence of user contact with the apparatus 600, an orientation or an acceleration/deceleration of the apparatus 600, and a change in temperature of the apparatus 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communication, wired or wirelessly, between the apparatus 600 and other devices. The apparatus 600 can access a wireless network based on a communication standard, such as WiFi, 2G, or 3G, or a combination thereof. In an exemplary embodiment, the communication component 616 receives a broadcast signal or broadcast associated information from an external broadcast management system via a broadcast channel. In an exemplary embodiment, the communication component 616 further includes a near field communication (NFC) module to facilitate short-range communications.

In exemplary embodiments, the apparatus 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described method.

In exemplary embodiments, there is also provided a non-transitory computer readable storage medium including instructions, such as included in the memory 604, executable by the processor 620 in the apparatus 600, for performing the above method. For example, the non-transitory computer-readable storage medium may be a ROM, a RAM, a CD-ROM, a magnetic tape, a floppy disc, an optical data storage device, and the like.

A non-transitory computer-readable storage medium is provided in the embodiments. When the instructions in the storage medium are executed by the processor of the mobile terminal, the mobile terminal can execute the above resource indication method on the unlicensed spectrum.

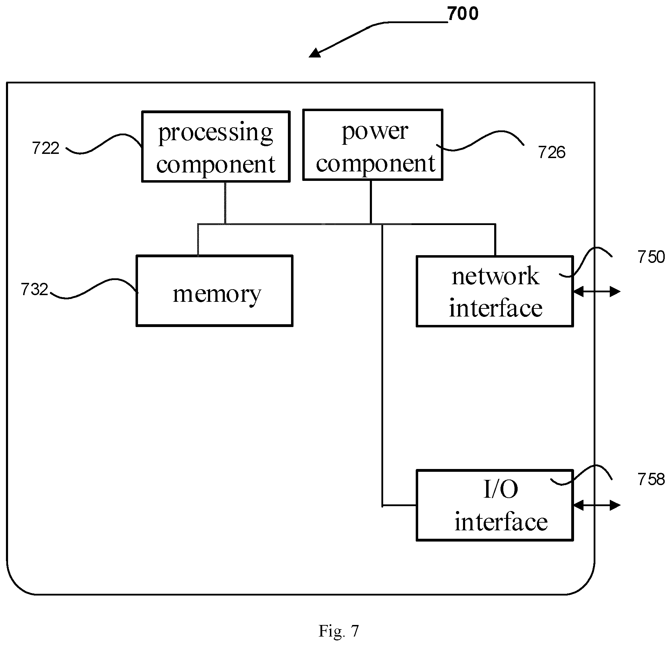

Fig. 7 is a block diagram showing a connection processing apparatus 700 according to an exemplary embodiment. This embodiment is however presented for illustration purposes only.

For example, the apparatus 700 may be provided as a base station device.

Referring to Fig. 7, the apparatus 700 includes a processing component 722, which further includes one or more processors, and a memory resource represented by a memory 732, for storing instructions that can be executed by the processing component 722, such as an application program. The application program stored in the memory 732 may include one or more modules each corresponding to a set of instructions. In addition, the processing component 722 is configured to execute instructions to perform the above method: receiving an RRC connection state change indication from a user device; and changing an RRC connection state with the user device according to the RRC connection state change indication in response to the RRC connection state change indication being agreed.

The apparatus 700 may also include a power component 726 configured to perform power management of the apparatus 700, a wired or wireless network interface 750 configured to connect the apparatus 700 to a network, and an input output (I/O) interface 758. The apparatus 700 can operate based on an operating system stored in the memory 732, such as Windows ServerTM, Mac OS XTM, UnixTM, LinuxTM, FreeBSDTM or the like.

Those skilled in the art will easily think of other embodiments of the present disclosure after considering the specification and practicing the invention disclosed herein. The description and the embodiments are to be regarded as exemplary only, and the true scope of the present disclosure are pointed out by the following claims.

### Industrial applicability

When the user device needs to change the RRC connection state with the base station device of the first operator, an RRC connection state change indication is sent to the base station device of the first operator. Therefore, when the user device changes the RRC connection state with the base station device of the first operator, the base station device of the first operator has already acquired the change in the RRC connection state, so that it will not be considered as a radio link failure and trigger the corresponding recovery mechanism. That is, the long-time non-response caused by the user device responding to the paging of the base station device of other operators will not be regarded as a radio link failure, which avoids disturbing the data statistics and related algorithms in the base station device of the first operator.

## Claims

1. A connection processing method, applied to a user device supporting multiple operators, comprising:
sending (101, 305) a radio resource control, RRC, connection state change indication to a base station device of a first operator in response to a requirement (304) of the user device to change the RRC connection state with the base station device of the first operator;
**characterized in that**, sending the RRC connection state change indication to the base station device of the first operator comprises:
sending the RRC connection state change indication to the base station device of the first operator in response to determining the user device has a configuration that allows sending the RRC connection state change indication to the base station device of the first operator;
the method further comprises: receiving (303) configuration information that allows the RRC connection state change indication to be sent to the base station device of the first operator;
before receiving the configuration information that allows the RRC connection state change indication to be sent to the base station device of the first operator, the method further comprises reporting (301) whether the user device supports a capability of the RRC connection state change indication with the base station device of the first operator.

2. The connection processing method of claim 1, wherein the RRC connection state change indication comprises: instructing the base station device of the first operator to change from an RRC connected state to an RRC inactive state, or instructing the base station device of the first operator to change from the RRC connected state to an RRC idle state.

3. The connection processing method of claim 1 or 2, wherein the RRC connection state change indication further comprises at least one of: a reason for changing the RRC connection state, a duration of changing the RRC connection state, and a time of changing the RRC connection state.

4. The connection processing method of claim 3, wherein the reason for changing the RRC connection state comprises changing a network of the first operator to a network of a second operator to perform one of: monitoring a paging message and/or a system message, performing a measurement, and updating a tracking area.

5. The connection processing method of any of claims 1 to 4, wherein after sending the RRC connection state change indication to the base station device of the first operator, the method further comprises:
keeping (102) a connected state with the base station device of the first operator after acquiring that the base station device of the first operator rejects the RRC connection state change indication, or changing an RRC connection state after acquiring that the base station device of the first operator agrees to the RRC connection state change indication.

6. A connection processing method, applied to a base station device of an operator, comprising:
receiving (201) a radio resource control, RRC, connection state change indication from a user device; and
changing (202) an RRC connection state with the user device according to the RRC connection state change indication in response to the RRC connection state change indication being agreed;
**characterized in that**, before receiving the RRC connection state change indication from the user device, the method further comprises: sending to the user device configuration information that allows the RRC connection state change indication to be sent to the base station device of the operator;
wherein sending to the user device configuration information that allows the RRC connection state change indication to be sent to the base station device of the operator comprises:
receiving a report message, wherein the report message carries a capability of the RRC connection state change indication with the base station device of the operator;
acquiring whether the user device supports capability of the RRC connection state change indication according to the report message; and
sending to the user device configuration information that allows the RRC connection state change indication to be sent to the base station device of the operator.

7. The connection processing method of claim 6, further comprising:
maintaining the RRC connection state with the user device in response to the RRC connection state change indication being rejected.

8. The connection processing method of claim 6 or 7, wherein the RRC connection state change indication comprises: instructing the base station device of a first operator to change from an RRC connected state to an RRC inactive state, or instructing the base station device of the first operator to change from the RRC connected state to an RRC idle state.

9. The connection processing method of claim 8, wherein the RRC connection state change indication further comprises at least one of: a reason for changing the RRC connection state, the duration of changing the RRC connection state, and a time of changing the RRC connection state.

10. The connection processing method of claim 8, wherein the reason for changing the RRC connection state comprises changing a network of the first operator to a network of a second operator to perform one of: monitoring a paging message and/or a system message, performing a measurement, and updating a tracking area.

11. A connection processing apparatus, applied to a user device supporting multiple operators, comprising:
a first sending unit (401), configured to send a radio resource control, RRC, connection state change indication to a base station device of a first operator in response to a requirement of the user device to change the RRC connection state with the base station device of the first operator;
**characterized in that**, the first sending unit is further configured to: send the RRC connection state change indication to the base station device of the first operator in response to determining the user device has a configuration that allows sending the RRC connection state change indication to the base station device of the first operator;
the apparatus further comprises a first receiving unit configured to receive configuration information that allows the RRC connection state change indication to be sent to the base station device of the first operator;
the first sending unit is further configured to: report whether the user device supports a capability of the RRC connection state change indication with the base station device of the first operator before the first sending unit receives the configuration information that allows the RRC connection state change indication to be sent to the base station device of the first operator.

12. A non-transitory computer-readable storage medium, wherein when instructions in the storage medium are executed by a processor of a user device, the user device is caused to execute the connection processing method of any one of claims 1-5.

## Patentansprüche

1. Verbindungsverarbeitungsverfahren, angewendet auf ein Benutzergerät, das mehrere Betreiber unterstützt, umfassend:
Senden (101, 305) einer Funkressourcensteuerungs-(RRC-) Verbindungszustandsänderungsanzeige an eine Basisstationsvorrichtung eines ersten Betreibers als Reaktion auf eine Anforderung (304) des Benutzergeräts, den RRC-Verbindungszustand mit der Basisstationsvorrichtung des ersten Betreibers zu ändern;
**dadurch gekennzeichnet, dass** das Senden der RRC-Verbindungszustandsänderungsanzeige an die Basisstationsvorrichtung des ersten Betreibers umfasst:
Senden der RRC-Verbindungszustandsänderungsanzeige an die Basisstationsvorrichtung des ersten Betreibers als Reaktion auf die Feststellung, dass das Benutzergerät eine Konfiguration aufweist, die das Senden der RRC-Verbindungszustandsänderungsanzeige an die Basisstationsvorrichtung des ersten Betreibers erlaubt;
wobei das Verfahren ferner umfasst: Empfangen (303) von Konfigurationsinformationen, die das Senden der RRC-Verbindungszustandsänderungsanzeige an die Basisstationsvorrichtung des ersten Betreibers erlauben;
wobei das Verfahren vor dem Empfangen der Konfigurationsinformationen, die das Senden der RRC-Verbindungszustandsänderungsanzeige an die Basisstationsvorrichtung des ersten Betreibers erlauben, ferner das Melden (301) umfasst, ob das Benutzergerät eine Fähigkeit zur RRC-Verbindungszustandsänderungsanzeige mit der Basisstationsvorrichtung des ersten Betreibers unterstützt.

2. Verbindungsverarbeitungsverfahren nach Anspruch 1, wobei die RRC-Verbindungszustandsänderungsanzeige umfasst: Anweisen der Basisstationsvorrichtung des ersten Betreibers, von einem RRC-verbundenen Zustand in einen RRC-inaktiven Zustand zu wechseln, oder Anweisen der Basisstationsvorrichtung des ersten Betreibers, von dem RRC-verbundenen Zustand in einen RRC-Leerlaufzustand zu wechseln.

3. Verbindungsverarbeitungsverfahren nach Anspruch 1 oder 2, wobei die RRC-Verbindungszustandsänderungsanzeige ferner mindestens eines der folgenden Elemente umfasst: einen Grund für die Änderung des RRC-Verbindungszustands, eine Dauer der Änderung des RRC-Verbindungszustands und einen Zeitpunkt der Änderung des RRC-Verbindungszustands.

4. Verbindungsverarbeitungsverfahren nach Anspruch 3, wobei der Grund für die Änderung des RRC-Verbindungszustands das Wechseln von einem Netzwerk des ersten Betreibers zu einem Netzwerk eines zweiten Betreibers umfasst, um eines der folgenden durchzuführen: Überwachen einer Paging-Nachricht und/oder einer Systemnachricht, Durchführen einer Messung und Aktualisieren eines Tracking-Bereichs.

5. Verbindungsverarbeitungsverfahren nach einem der Ansprüche 1 bis 4, wobei nach dem Senden der RRC-Verbindungszustandsänderungsanzeige an die Basisstationsvorrichtung des ersten Betreibers das Verfahren ferner umfasst:
Beibehalten (102) eines verbundenen Zustands mit der Basisstationsvorrichtung des ersten Betreibers nach dem Erhalt, dass die Basisstationsvorrichtung des ersten Betreibers die RRC-Verbindungszustandsänderungsanzeige ablehnt, oder Ändern eines RRC-Verbindungszustands nach dem Erhalt, dass die Basisstationsvorrichtung des ersten Betreibers der RRC-Verbindungszustandsänderungsanzeige zustimmt.

6. Verbindungsverarbeitungsverfahren, angewendet auf eine Basisstationsvorrichtung eines Betreibers, umfassend:
Empfangen (201) einer Funkressourcensteuerungs-(RRC-) Verbindungszustandsänderungsanzeige von einem Benutzergerät; und
Ändern (202) eines RRC-Verbindungszustands mit dem Benutzergerät gemäß der RRC-Verbindungszustandsänderungsanzeige als Reaktion darauf, dass der RRC-Verbindungszustandsänderungsanzeige zugestimmt wird;
**dadurch gekennzeichnet, dass** vor dem Empfangen der RRC-Verbindungszustandsänderungsanzeige von dem Benutzergerät das Verfahren ferner umfasst:
Senden von Konfigurationsinformationen an das Benutzergerät, die das Senden der RRC-Verbindungszustandsänderungsanzeige an die Basisstationsvorrichtung des Betreibers erlauben;
wobei das Senden von Konfigurationsinformationen an das Benutzergerät, die das Senden der RRC-Verbindungszustandsänderungsanzeige an die Basisstationsvorrichtung des Betreibers erlauben, umfasst:
Empfangen einer Meldungsnachricht, wobei die Meldungsnachricht eine Fähigkeit zur RRC-Verbindungszustandsänderungsanzeige mit der Basisstationsvorrichtung des Betreibers trägt;
Erhalten, ob das Benutzergerät eine Fähigkeit zur RRC-Verbindungszustandsänderungsanzeige gemäß der Meldungsnachricht unterstützt; und
Senden von Konfigurationsinformationen an das Benutzergerät, die das Senden der RRC-Verbindungszustandsänderungsanzeige an die Basisstationsvorrichtung des Betreibers erlauben.

7. Verbindungsverarbeitungsverfahren nach Anspruch 6, ferner umfassend:
Beibehalten des RRC-Verbindungszustands mit dem Benutzergerät als Reaktion darauf, dass die RRC-Verbindungszustandsänderungsanzeige abgelehnt wird.

8. Verbindungsverarbeitungsverfahren nach Anspruch 6 oder 7, wobei die RRC-Verbindungszustandsänderungsanzeige umfasst: Anweisen der Basisstationsvorrichtung eines ersten Betreibers, von einem RRC-verbundenen Zustand in einen RRC-inaktiven Zustand zu wechseln, oder Anweisen der Basisstationsvorrichtung des ersten Betreibers, von dem RRC-verbundenen Zustand in einen RRC-Leerlaufzustand zu wechseln.

9. Verbindungsverarbeitungsverfahren nach Anspruch 8, wobei die RRC-Verbindungszustandsänderungsanzeige ferner mindestens eines der folgenden Elemente umfasst: einen Grund für die Änderung des RRC-Verbindungszustands, die Dauer der Änderung des RRC-Verbindungszustands und einen Zeitpunkt der Änderung des RRC-Verbindungszustands.

10. Verbindungsverarbeitungsverfahren nach Anspruch 8, wobei der Grund für die Änderung des RRC-Verbindungszustands das Wechseln von einem Netzwerk des ersten Betreibers zu einem Netzwerk eines zweiten Betreibers umfasst, um eines der folgenden durchzuführen:
Überwachen einer Paging-Nachricht und/oder einer Systemnachricht, Durchführen einer Messung und Aktualisieren eines Tracking-Bereichs.

11. Verbindungsverarbeitungsvorrichtung, angewendet auf ein Benutzergerät, das mehrere Betreiber unterstützt, umfassend:
eine erste Sendeeinheit (401), die konfiguriert ist, um eine Funkressourcensteuerungs-(RRC-) Verbindungszustandsänderungsanzeige an eine Basisstationsvorrichtung eines ersten Betreibers als Reaktion auf eine Anforderung des Benutzergeräts zu senden, den RRC-Verbindungszustand mit der Basisstationsvorrichtung des ersten Betreibers zu ändern;
**dadurch gekennzeichnet, dass** die erste Sendeeinheit ferner konfiguriert ist, um: die RRC-Verbindungszustandsänderungsanzeige an die Basisstationsvorrichtung des ersten Betreibers als Reaktion auf die Feststellung zu senden, dass das Benutzergerät eine Konfiguration aufweist, die das Senden der RRC-Verbindungszustandsänderungsanzeige an die Basisstationsvorrichtung des ersten Betreibers erlaubt;
wobei die Vorrichtung ferner eine erste Empfangseinheit umfasst, die konfiguriert ist, um Konfigurationsinformationen zu empfangen, die das Senden der RRC-Verbindungszustandsänderungsanzeige an die Basisstationsvorrichtung des ersten Betreibers erlauben;
wobei die erste Sendeeinheit ferner konfiguriert ist, um: zu melden, ob das Benutzergerät eine Fähigkeit zur RRC-Verbindungszustandsänderungsanzeige mit der Basisstationsvorrichtung des ersten Betreibers unterstützt, bevor die erste Sendeeinheit die Konfigurationsinformationen empfängt, die das Senden der RRC-Verbindungszustandsänderungsanzeige an die Basisstationsvorrichtung des ersten Betreibers erlauben.

12. Nicht-flüchtiges computerlesbares Speichermedium, wobei, wenn Anweisungen in dem Speichermedium von einem Prozessor eines Benutzergeräts ausgeführt werden, das Benutzergerät veranlasst wird, das Verbindungsverarbeitungsverfahren nach einem der Ansprüche 1 bis 5 auszuführen.

## Revendications

1. Procédé de traitement de connexion, appliqué à un dispositif utilisateur prenant en charge plusieurs opérateurs, comprenant :
l'envoi (101, 305) d'une indication de changement d'état de connexion de contrôle des ressources radio, RRC, à un dispositif de station de base d'un premier opérateur en réponse à une exigence (304) du dispositif utilisateur de changer l'état de connexion RRC avec le dispositif de station de base du premier opérateur ;
**caractérisé en ce que** l'envoi de l'indication de changement d'état de connexion RRC au dispositif de station de base du premier opérateur comprend :
l'envoi de l'indication de changement d'état de connexion RRC au dispositif de station de base du premier opérateur en réponse à la détermination que le dispositif utilisateur dispose d'une configuration permettant l'envoi de l'indication de changement d'état de connexion RRC au dispositif de station de base du premier opérateur ;
le procédé comprenant en outre : la réception (303) d'informations de configuration permettant l'envoi de l'indication de changement d'état de connexion RRC au dispositif de station de base du premier opérateur ;
avant de recevoir les informations de configuration permettant l'envoi de l'indication de changement d'état de connexion RRC au dispositif de station de base du premier opérateur, le procédé comprenant en outre le signalement (301) si le dispositif utilisateur prend en charge une capacité de l'indication de changement d'état de connexion RRC avec le dispositif de station de base du premier opérateur.

2. Procédé de traitement de connexion selon la revendication 1, dans lequel l'indication de changement d'état de connexion RRC comprend : l'instruction au dispositif de station de base du premier opérateur de passer d'un état connecté RRC à un état inactif RRC, ou l'instruction au dispositif de station de base du premier opérateur de passer de l'état connecté RRC à un état inactif RRC.

3. Procédé de traitement de connexion selon la revendication 1 ou 2, dans lequel l'indication de changement d'état de connexion RRC comprend en outre au moins l'un des éléments suivants : une raison du changement d'état de connexion RRC, une durée du changement d'état de connexion RRC, et un moment du changement d'état de connexion RRC.

4. Procédé de traitement de connexion selon la revendication 3, dans lequel la raison du changement d'état de connexion RRC comprend le passage d'un réseau du premier opérateur à un réseau d'un deuxième opérateur pour effectuer l'une des opérations suivantes : la surveillance d'un message de paging et/ou d'un message système, l'exécution d'une mesure, et la mise à jour d'une zone de suivi.

5. Procédé de traitement de connexion selon l'une quelconque des revendications 1 à 4, dans lequel, après l'envoi de l'indication de changement d'état de connexion RRC au dispositif de station de base du premier opérateur, le procédé comprend en outre :
le maintien (102) d'un état connecté avec le dispositif de station de base du premier opérateur après avoir acquis que le dispositif de station de base du premier opérateur rejette l'indication de changement d'état de connexion RRC, ou le changement d'un état de connexion RRC après avoir acquis que le dispositif de station de base du premier opérateur accepte l'indication de changement d'état de connexion RRC.

6. Procédé de traitement de connexion, appliqué à un dispositif de station de base d'un opérateur, comprenant :
la réception (201) d'une indication de changement d'état de connexion de contrôle des ressources radio, RRC, en provenance d'un dispositif utilisateur ; et
le changement (202) d'un état de connexion RRC avec le dispositif utilisateur selon l'indication de changement d'état de connexion RRC en réponse à l'acceptation de l'indication de changement d'état de connexion RRC ;
**caractérisé en ce que**, avant de recevoir l'indication de changement d'état de connexion RRC en provenance du dispositif utilisateur, le procédé comprend en outre : l'envoi au dispositif utilisateur d'informations de configuration permettant l'envoi de l'indication de changement d'état de connexion RRC au dispositif de station de base de l'opérateur ;
dans lequel l'envoi au dispositif utilisateur d'informations de configuration permettant l'envoi de l'indication de changement d'état de connexion RRC au dispositif de station de base de l'opérateur comprend :
la réception d'un message de rapport, dans lequel le message de rapport porte une capacité de l'indication de changement d'état de connexion RRC avec le dispositif de station de base de l'opérateur ;
l'acquisition de la prise en charge ou non par le dispositif utilisateur de la capacité de l'indication de changement d'état de connexion RRC selon le message de rapport ; et
l'envoi au dispositif utilisateur d'informations de configuration permettant l'envoi de l'indication de changement d'état de connexion RRC au dispositif de station de base de l'opérateur.

7. Procédé de traitement de connexion selon la revendication 6, comprenant en outre : le maintien de l'état de connexion RRC avec le dispositif utilisateur en réponse au rejet de l'indication de changement d'état de connexion RRC.

8. Procédé de traitement de connexion selon la revendication 6 ou 7, dans lequel l'indication de changement d'état de connexion RRC comprend : l'instruction au dispositif de station de base d'un premier opérateur de passer d'un état connecté RRC à un état inactif RRC, ou l'instruction au dispositif de station de base du premier opérateur de passer de l'état connecté RRC à un état inactif RRC.

9. Procédé de traitement de connexion selon la revendication 8, dans lequel l'indication de changement d'état de connexion RRC comprend en outre au moins l'un des éléments suivants : une raison du changement d'état de connexion RRC, la durée du changement d'état de connexion RRC, et un moment du changement d'état de connexion RRC.

10. Procédé de traitement de connexion selon la revendication 8, dans lequel la raison du changement d'état de connexion RRC comprend le passage d'un réseau du premier opérateur à un réseau d'un deuxième opérateur pour effectuer l'une des opérations suivantes : la surveillance d'un message de paging et/ou d'un message système, l'exécution d'une mesure, et la mise à jour d'une zone de suivi.

11. Appareil de traitement de connexion, appliqué à un dispositif utilisateur prenant en charge plusieurs opérateurs, comprenant :
une première unité d'envoi (401), configurée pour envoyer une indication de changement d'état de connexion de contrôle des ressources radio, RRC, à un dispositif de station de base d'un premier opérateur en réponse à une exigence du dispositif utilisateur de changer l'état de connexion RRC avec le dispositif de station de base du premier opérateur ;
**caractérisé en ce que** la première unité d'envoi est en outre configurée pour : envoyer l'indication de changement d'état de connexion RRC au dispositif de station de base du premier opérateur en réponse à la détermination que le dispositif utilisateur dispose d'une configuration permettant l'envoi de l'indication de changement d'état de connexion RRC au dispositif de station de base du premier opérateur ; l'appareil comprenant en outre une première unité de réception configurée pour recevoir des informations de configuration permettant l'envoi de l'indication de changement d'état de connexion RRC au dispositif de station de base du premier opérateur ;
la première unité d'envoi étant en outre configurée pour : signaler si le dispositif utilisateur prend en charge une capacité de l'indication de changement d'état de connexion RRC avec le dispositif de station de base du premier opérateur avant que la première unité d'envoi ne reçoive les informations de configuration permettant l'envoi de l'indication de changement d'état de connexion RRC au dispositif de station de base du premier opérateur.

12. Support de stockage non transitoire lisible par ordinateur, dans lequel, lorsque des instructions dans le support de stockage sont exécutées par un processeur d'un dispositif utilisateur, le dispositif utilisateur est amené à exécuter le procédé de traitement de connexion selon l'une quelconque des revendications 1 à 5.
